# EUROPÄISCHE PATENTANMELDUNG

(11) **EP 2 213 550 A1**
(43) Veröffentlichungstag der Anmeldung: **04.08.2010**
(21) Anmeldenummer: 10000838.2
(22) Anmeldetag: 28.01.2010
(51) Int. Cl.: B62D 21/09, B62D 29/00

(54) **Hohlprofil für Kraftfahrzeuge mit Versteifungselementen**

(30) Priorität: 30.01.2009 DE 102009006760
(71) Anmelder: Audi AG, 85045 Ingolstadt (DE)
(72) Erfinder: Venier, Frank, 74189 Weinsberg (DE); Keith, Torsten, 74243 Langenbrettach (DE); Gotthelf, Matthias, 74861 Neudenau (DE)
(74) Vertreter: Patzelt, Heike Anna Maria

(57) **Zusammenfassung**

Die Erfindung betrifft ein Hohlprofil (1) für Kraftfahrzeuge mit wenigstens einem in eine Hohlkammer (3) des Hohlprofils (1) eingesetzten Versteifungselement (2), wobei erfindungsgemäß das Hohlprofil (1) auf wenigstens zwei Innenflächen (1a, 1b, 1c, 1d) jeweils Führungsmittel (4) und das Versteifungselement (2) Eingriffsmittel (5) aufweist, die mit den Führungsmitteln (4) derart in Eingriff stehen, dass das Versteifungselement (2) in dem Hohlprofil (1) verschiebbar ist.

## Beschreibung

Die Erfindung betrifft ein Hohlprofil für Kraftfahrzeuge mit wenigstens einem in eine Hohlkammer des Hohlprofils eingesetzten Versteifungselement gemäß Oberbegriff des Patentanspruchs 1.

Aus dem Stand der Technik ist es bekannt, Aluminium-Hohlprofile im Fahrzeugbau u. a. für einen gewichtsgünstigen Aufbau zu verwenden, wobei Aluminium-Strangpressprofile mit verschiedenen Querschnitten, wie Einkammer-Hohlprofile oder komplexen Mehrkammerprofile zum Einsatz kommen. Diese Mehrkammerprofile dienen der Erhöhung der Steifigkeit und müssen in vielen Fällen auch Crash-Anforderungen erfüllen.

Die Stege solcher komplizierten Aluminium-Mehrkammerprofile verlaufen aufgrund der fertigungstechnischen Möglichkeiten in Profilrichtung über die gesamte Länge des Profils konstant durch. Jedoch werden zur Erfüllung von Crash-Anforderungen nur lokal Versteifungen gegen Einknicken und Beulen benötigt, infolgedessen sich Aluminium-Material an Stellen befindet, an denen es keine technische Funktion erfüllt und darüber hinaus zusätzliches Gewicht in der Struktur verursacht. Zusätzlich ist die Pressbarkeit von komplexen, in einem Querschnitt gepressten Mehrkammerprofilen hinsichtlich erzielbarer Wandstärkenverteilung, Wandstärkentoleranz, Gesamtmaßhaltigkeit, Materialfestigkeit und möglichst maximaler geometrischer Abmessung durch den zur Verfügung stehenden Herstellprozess beschränkt.

So ist aus der DE 199 04 630 A1 ein Hohlprofil für Fahrzeuge bekannt, in dessen Hohlkammer Versteifungselemente eingesetzt werden, die bei rechteckförmigem Querschnitt des Hohlprofils sich stabförmig diagonal zwischen zwei Eckbereichen des Kammerquerschnittes erstrecken und mittels eines expandierenden Klebstoffes in einer gewünschten Position an der Hohlkammerinnenwand fixiert werden. Durch den nach dem Einführen des Versteifungselementes expandierenden Klebstoff wird dieses Versteifungselement in dem Hohlprofil verspannt, wodurch gegenüber einer üblichen Klebung verhindert wird, dass sich die Versteifungselemente ablösen könnten, mit der Folge des Auftretens eines unerwünschten Klapperns.

Nachteilig ist bei diesem derart mit Versteifungselementen aufgebauten Hohlprofil der für das Einführen und die Fixierung der Versteifungselemente erforderliche aufwendige Klebeprozess hinsichtlich der Einbringung und der Aushärtung des Klebstoffes.

Ferner ist aus der EP 1 889 776 A1 ein Verfahren zum Verstärken einer offenen Hohlprofilstruktur für Kraftfahrzeuge bekannt, bei dem stabförmige und/oder plattenförmige Versteifungselemente zu Versteifungsprofilen zusammengesetzt werden und an vorbestimmten Fixierpunkten auf dem Innenwandbereich der offenen Hohlprofilstruktur mit derselben verbunden werden. Aufgrund einer Umhüllung aus Thermoplastschicht weisen die Versteifungsprofile ein Übermaß im Vergleich zu der Abmessung zwischen den gegenüberliegenden Fixierpunkten auf dem Innenwandbereich der Hohlprofilstruktur derart auf, dass nach dem Eindrücken dieser Versteifungsprofile in die offene Hohlprofilstruktur die für die Verbindung mit dem Hohlprofil vorgesehenen Verbindungsstellen der Versteifungsprofile lokal erwärmt und aufgeschmolzen werde. Anschließend werden die Versteifungsprofile unter Anpassung deren plastifizierten Bereiche an die Kontur der Innenwandbereiche der Hohlprofilstruktur in die gewünschte Position in dem Hohlprofil bewegt. Durch Abkühlung der an die Kontur des Hohlprofils angepassten plastifizierten Bereiche des Versteifungsprofils verbindet sich dieses haftsicher mit dem Innenwandbereich der Hohlprofilstruktur.

Nachteilig bei diesem bekannten Verfahren sind zum einen die aufwendige Herstellung der thermoplastisch umhüllten Versteifungsprofile und zum anderen der aufwendige Prozess zur Herstellung der mit solchen Versteifungsprofilen versehenen Hohlprofilstruktur.

Aufgabe der Erfindung ist es, ein mit Versteifungselementen verstärktes Hohlprofil anzugeben, das kostengünstig herstellbar und flexibel für unterschiedliche Verwendungen einsetzbar ist. Ferner ist es auch eine Aufgabe der Erfindung, ein Verfahren anzugeben, mit dem diese versteiften Hohlprofile einfach aufzubauen sind.

Die erstgenannte Aufgabe wird gelöst durch ein mit Versteifungselementen versteiftes Hohlprofil gemäß den Merkmalen des Patentanspruches 1.

Hiernach wird bei einem Hohlprofil für Kraftfahrzeuge mit wenigstens einem in eine Hohlkammer des Hohlprofils eingesetzten Versteifungselement erfindungsgemäß das Hohlprofil auf wenigstens zwei Innenflächen jeweils mit Führungsmitteln ausgebildet, ferner weist das Versteifungselement Eingriffsmittel auf, die mit den Führungsmitteln derart in Eingriff stehen, dass das Versteifungselement in dem Hohlprofil verschiebbar ist.

Durch eine derartige Ausbildung des Hohlprofils und des zur Versteifung dieses Hohlprofils vorgesehenen Versteifungselementes wird ein sehr einfach herzustellendes, insbesondere zu pressendes Hohlprofil geschaffen, in das die ebenfalls leicht als Profil zu pressenden Versteifungselemente eingebracht werden können. Hierbei kann das erfindungsgemäß ausgebildete Hohlprofil als Grundprofil verwendet werden, das gegenüber Standardprofilen nur einen geringfügig höheren Materialaufwand erfordert und damit eine erhöhte Anwendungsbreite zulässt. Durch die Herstellung der Versteifungselemente als Profilteil lassen sich in einfacher Weise durch Wahl der entsprechenden Länge leicht unterschiedliche Anforderungen an lokale Steifigkeiten erfüllen und so bspw. länderspezifische Crash-Anforderungen bei gleichen Außenabmessungen des Grundprofils erzeugen. Die Flexibilität zeigt sich insbesondere dann als vorteilhaft, wenn während eines Fahrzeuglebenszyklus bspw. die Crash-Anforderungen erhöht werden. In einem solchen Fall lassen sich zusätzlich in einfacher Weise lokale Steifigkeiten aufbauen, indem bspw. weitere Versteifungselemente oder in Längsrichtung verlängerte Versteifungselemente eingesetzt werden.

Besonders vorteilhaft ist es, wenn die Führungsmittel des Hohlprofils axial hinsichtlich der Profilrichtung verlaufen, wodurch eine einfache Pressung als Profil ermöglicht wird.

In einer Weiterbildung der Erfindung sind die Führungsmittel als Führungsnuten ausgebildet und die Eingriffsmittel des Versteifungselements entsprechend der Führungsnuten derart profiliert, dass das Versteifungselement in dem Hohlprofil axial verschiebbar:ist. Wie aus der Holzverbindungstechnik bekannt, können diese Führungsmittel und die zugehörigen Eingriffsmittel als sogenannte "Schwalbenschwanzführung" oder in der Art einer quadratischen Spundung ausgeführt werden.

Umgekehrt sind gemäß einer anderen Weiterbildung der Erfindung die Eingriffsmittel des Versteifungselements als Nuten ausgebildet, wobei die Führungsmittel des Hohlprofils entsprechend der Nuten derart profiliert sind, dass das Versteifungselement in dem Hohlprofil axial verschiebbar ist.

Idealerweise verlaufen die Führungsmittel des Hohlprofils auf einer parallel zur Kante des Hohlprofils verlaufenden Linie, vorzugsweise auf der Mittellinie der Seitenflächen des Hohlprofils, so dass dadurch das Versteifungselement über die gesamte Länge des Hohlprofils leicht verschiebbar ist.

In einer Weiterbildung der Erfindung ist das Versteifungselement aus wenigstens einem stegartigen Element gebildet, an dessen Enden jeweils ein Eingriffsmittel vorgesehen ist. Vorzugsweise ist das Versteifungselement quer zur axialen Richtung des Hohlprofils kreuzförmig ausgebildet, wobei an den Enden der das Kreuz bildenden stegartigen Elemente die Eingriffsmittel vorgesehen sind, die in die Führungsnuten auf der Innenfläche des Hohlprofils verschiebbar eingreifen.

In vorteilhafter Weise ist das Versteifungselement als Profil ausgeführt und kann bedarfsgemäß auf die gewünschte Länge abgelängt werden, so dass das Versteifungselement plattenförmig oder als kurzer Profilabschnitt sich quer zur axialen Richtung des Hohlprofils erstreckt.

Zwecks leichter Positionierung eines Versteifungselementes an einer vorbestimmten Stelle des Hohlprofils sind während der Produktion des versteiften Hohlprofils Tiefenanschläge vorgesehen.

Gemäß einer Weiterbildung der Erfindung ist das Hohlprofil ein Blechprofil und/oder ein Strangpreßprofil, vorzugsweise aus Leichtmetall, wie Aluminium oder Magnesium hergestellt.

Des Weiteren ist auch vorzugsweise das Versteifungselement ein Strangpreßprofil und/oder ein Gußteil, insbesondere aus Aluminium oder Magnesium hergestellt.

Schließlich ergibt sich eine vorteilhafte Weiterbildung der Erfindung, wenn das Hohlprofil und das Versteifungselement aus unterschiedlichen Materialgruppen hergestellt sind, vorzugsweise das Hohlprofil aus Aluminium und das Versteifungselement aus Kunststoff, vorzugsweise aus einem faserverstärkten Kunststoff. Als Faserstoff kommt Kohlefaser, Glasfaser, Aramidfaser usw. zum Einsatz. Durch eine solche Material-Hybridisierung lassen sich Anforderungen bspw. an das Crash-Verhalten der Fahrzeugstruktur noch gezielter und spezifischer erfüllen.

Die zweitgenannte Aufgabe wird gelöst durch ein Verfahren zum Versteifen eines erfindungsgemäßen Hohlprofils mit einem erfindungsgemäßen Versteifungselement gemäß den Merkmalen des Patentanspruches 13.

Hiernach wird das Versteifungselement mittels eines Tiefenanschlages an einer vorbestimmten Stelle des Hohlprofils positioniert und anschließend mit dem Hohlprofil kraftschlüssig verbunden, vorzugsweise durch Reibschweißen oder thermisches Schweißen, ferner sind neben der Verwendung von Schrauben auch Nieten oder Nieten und anschließendes Kleben, Verprägen oder Verprägen mit anschließendem Kleben geeignet. Wegen der einseitigen Zugänglichkeit sind hier besonders Blindnieten oder FDS-Schrauben (Flow-Dill-Schrauben) in Kombination mit Kleben geeignet.

Dies zeigt, dass ein derart verstärktes Hohlprofil einfach und damit kostengünstig herstellbar ist.

Bei einer Weiterbildung des erfindungsgemäßen Verfahrens kann in vorteilhafter Weise zusätzlich zu einem Versteifungselement ein Schaumformling als Akustikschaum in das Hohlprofil eingeführt und mit dem Hohlprofil kraftschlüssig verbunden werden. Dann bietet es sich an, das Versteifungselement als auch diesen Schaumformling gleichzeitig bspw. in der KTL(kathodische Tauchlackierung)-Lacktrocknung mit dem Hohlprofil zu verbinden.

Die Erfindung wird nachfolgend anhand von Ausführungsbeispielen unter Bezugnahme auf die Figuren ausführlich beschrieben.

### Es zeigen:

- Figur 1: eine perspektivische Darstellung eines Ausführungsbeispiels eines erfindungsgemäß versteiften Hohlprofils,
- Figur 2: eine Schnittflächendarstellung der Stirnfläche des Hohlprofils nach Figur 1,
- Figur 3: eine perspektivische Darstellung des in Figur 1 dargestellten erfindungsgemäßen Versteifungselementes , und
- Figur 4: eine Schnittdarstellung eines weiteren Ausführungsbeispiels eines erfindungsgemäß versteiften Hohlprofils.

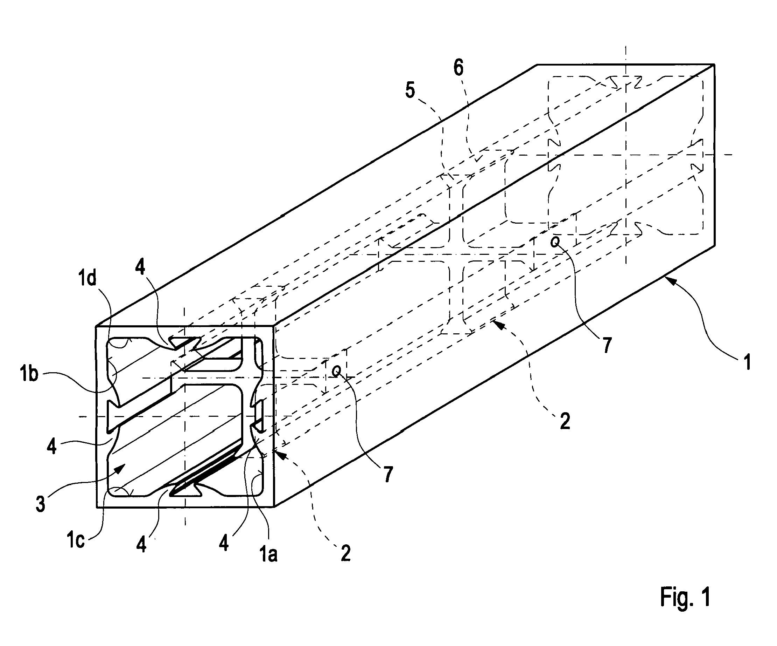

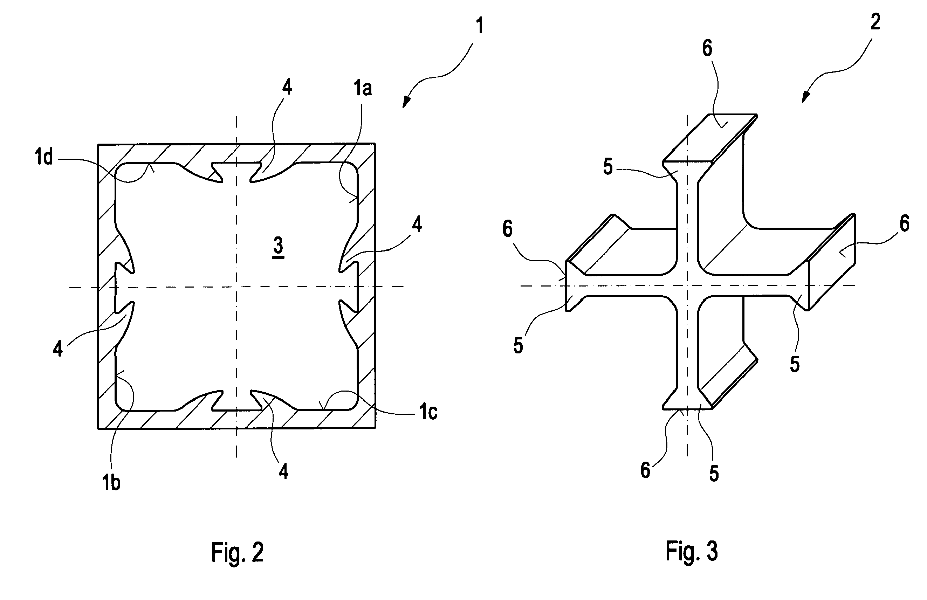

Das Hohlprofil 1 nach Figur 1 und Figur 2 weist einen quadratischen Querschnitt auf, an dessen vier Innenflächen 1a, 1b, 1c und 1d in Profilrichtung, also über die gesamte Länge des Profils jeweils Führungsnuten 4 verlaufen. Diese Führungsnuten 4 sind jeweils auf einer Mittellinie der vier Innenflächen 1a, 1b, 1c und 1d angeordnet. Daneben sind auch andere Querschnitte, bspw. rechteckförmige Querschnitte verwendbar, ebenso n-flächige Hohlprofile mit mehr als vier Seitenflächen. Auch müssen die Führungsnuten nicht auf den Mittellinien, sondern können auf den Innenflächen auch unsymmetrisch verlaufen.

Im Hohlraum 3 des in Figur 1 perspektivisch darstellten Hohlprofils 1 sind beispielhaft zwei Versteifungselemente 2 angeordnet, die jeweils gemäß Figur 3 ausgebildet sind. Dieses Versteifungselement 2 nach Figur 3 ist unter Bildung eines Kreuzes stegartig ausgebildet und weist an seinen vier Enden jeweils ein Eingriffsmittel 5 mit Stirnflächen 6 auf. Jedes dieser Eingriffsmittel 5 ist derart profiliert, dass es von der Führungsnut 4 des Hohlprofils 1 aufgenommen werden kann und dort innerhalb des Hohlraums 3 des Hohlprofils an jede gewünschte Stelle geschoben werden kann, wie dies deutlich in Figur 1 zu erkennen ist.

Bei der Verwendung eine n-flächigen Hohlprofiles 1 weist ein zugehöriges Versteifungselement 2 natürlich entsprechend der Anzahl n der Innenflächen n Enden mit jeweiligen Eingriffsmitteln 5 auf. Die die Eingriffsmittel 5 tragenden Enden eines Versteifungselements 2 müssen nicht radialsymmetrisch mit entsprechenden Stegen ausgebildet sein, sondern können auch unsymmetrisch ausgeformt sein, insbesondere, wenn eine ungerade Anzahl n von Seitenflächen eines n-flächigen Hohlprofils 1 vorgegeben ist.

Das Versteifungselement 2 wird als Profil hergestellt und kann auf jede gewünschte Länge abgeschnitten werden. Entsprechend zeigt die Figur 1 ein Hohlprofil 1 mit zwei Versteifungselementen 2, die sich in ihrer in Profilrichtung verlaufende Länge unterscheiden und somit zu unterschiedlichen Versteifungswerten an den entsprechenden versteiften Abschnitten des Hohlprofils 1 führen.

Über die Stirnflächen 6 der Eingriffsmittel 2, die flächig an den Innenflächen 1a, 1b, 1c und 1d anliegen, erfolgt eine feste Verbindung mit dem Hohlprofil 1 an Verbindungsstellen 7 nach Figur 1. Zuvor werden die beiden Versteifungselemente 2 bspw. über Tiefenanschläge (die nicht dargestellt sind) an die gewünschten Abschnitte des Hohlprofils 1 nach Figur 1 geschoben. Anschließend erfolgt die feste Verbindung über die Verbindungsstellen 7 durch Verprägen oder Nieten, durch Verprägen und Kleben, Nieten und Kleben, Reibschweißen oder thermisches Schweißen. Auch Schrauben können zur kraftschlüssigen Verbindung verwendet werden. Aufgrund der einseitigen Zugänglichkeit, nämlich nur von außen, kommen nur Blindnieten oder FDS-Schrauben (Flow-Dill-Schrauben) zur Verwendung, die alleine oder in Kombination, evtl. mit anschließendem Kleben zum Einsatz kommen können. Das Kleben erhöht die Steifigkeit und verhindert ein möglicherweise auftretendes Klappern.

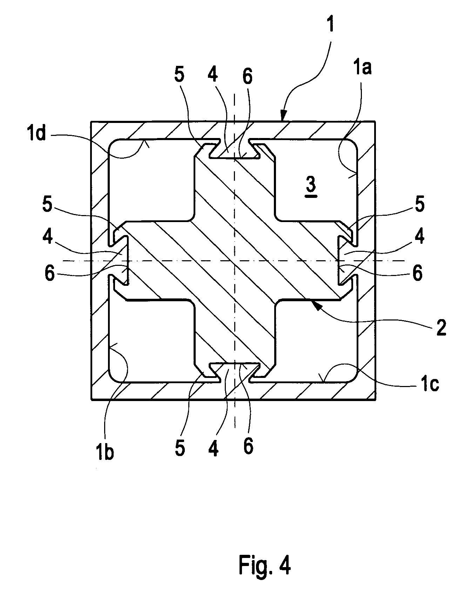

Bei dem Hohlprofil 1 nach Figur 1 sind die Führungsmittel 4 als Nuten und die Eingriffsmittel 5 der Versteifungselemente 2 Hieran angepasst. Die Figur 4 zeigt in einer Schnittdarstellung ein versteiftes Hohlprofil 1, bei dem umgekehrt das Versteifungselement 2 mit als Nuten ausgebildeten Eingriffsmittel 5 versehen ist und die zugehörigen Führungsmittel 4 auf den Innenwänden 1a, 1b, 1c, und 1d entsprechend dieser Nuten profiliert sind, so dass auch in diesem Fall das Versteifungselement 2 verschiebbar ist.

Die Profilierung der Führungsmittel 4 und der Eingriffsmittel 5 können in unterschiedlichster Weise realisiert sein, wobei es nur darauf ankommt, dass die Profilierungen derart aneinander angepasst sind, dass die Führungsmittel 4 mit den Eingriffsmitteln 5 derart in Eingriff stehen, dass das Versteifungselement 2 entlang der Führungsmittel 4 verschiebbar ist.

Auch die Versteifungselemente können unterschiedlich ausgestaltet sein, bspw. kann ein stegartig ausgebildetes Versteifungselement nur mit zwei auf benachbarten Innenflächen, bspw. Innenfläche 1a und 1c angeordneten Führungsmitteln in Eingriff stehen.

Weiterhin ist es auch möglich, ein offenes Hohlprofil mit einem Versteifungselement lokal zu versteifen, indem hierzu bspw. ein Versteifungselement verwendet wird, das I-förmig mit einem mittigen Quersteg ausgebildet ist, so dass an dessen drei Enden die Eingriffsmittel mit auf drei benachbarten Innenflächen des Hohlprofils angeordneten Führungsmittel in Eingriff stehen.

Schließlich können nicht nur Einkammer-Hohlprofile entsprechend der Erfindung versteift werden, sondern auch Mehrkammerprofile. Zum Beispiel kann eine Kammer eines Mehrkammerprofils entsprechend der Erfindung mit Führungsmitteln versehen werden, in die zur Versteifung des Mehrkammerprofils erfindungsgemäße Versteifungselemente in Eingriff stehen.

Erfindungsgemäß versteifte Hohlprofile können bspw. im Karosseriebau für Schweller oder B-Säulen o. ä. verwendet werden.

### Bezugszeichenliste

- 1: Hohlprofil
- 1a - 1d: Innenflächen des Hohlprofils 1
- 2: Versteifungselement
- 3: Hohlraum des Hohlprofils 1
- 4: Führungsmittel des Hohlprofils 1
- 5: Eingriffsmittel des Versteifungselements 2
- 6: Stirnflächen der Eingriffsmittel 5
- 7: Verbindungsstellen

## Patentansprüche

1. Hohlprofil (1) für Kraftfahrzeuge mit wenigstens einem in eine Hohlkammer (3) des Hohlprofils (1) eingesetzten Versteifungselement (2),
**dadurch gekennzeichnet, dass**
- das Hohlprofil (1) auf wenigstens zwei Innenflächen (1a, 1b, 1c, 1d) jeweils Führungsmittel (4) aufweist, und
- das Versteifungselement (2) Eingriffsmittel (5) aufweist, die mit den Führungsmitteln (4) derart in Eingriff stehen, dass das Versteifungselement (2) in dem Hohlprofil (1) verschiebbar ist.

2. Hohlprofil nach Anspruch 1,
**dadurch gekennzeichnet, dass** die Führungsmittel (4) des Hohlprofils (1) axial hinsichtlich des Hohlprofils (1) verlaufen.

3. Hohlprofil nach Anspruch 1 oder 2,
**dadurch gekennzeichnet, dass**
- die Führungsmittel als Führungsnuten (4) ausgebildet sind, und
- die Eingriffsmittel (5) des Versteifungselements (2) entsprechend der Führungsnuten (4) derart profiliert sind, dass das Versteifungselement (2) in dem Hohlprofil (1) axial verschiebbar ist.

4. Hohlprofil (1) nach Anspruch 1 oder 2,
**dadurch gekennzeichnet, dass**
- die Eingriffsmittel (5) des Versteifungselements (2) als Nuten ausgebildet sind, und
- die Führungsmittel (4) des Hohlprofils (1) entsprechend der Nuten derart profiliert sind, dass das Versteifungselement (2) in dem Hohlprofil (1) axial verschiebbar ist.

5. Hohlprofil (1) nach einem der vorangehenden Ansprüche,
**dadurch gekennzeichnet, dass** die Führungsmittel (4) des Hohlprofils (1) auf einer parallel zur Kante des Hohlprofils (1) verlaufenden Linie, vorzugsweise Mittellinie der Innenflächen (1a, 1b, 1c, 1d) des Hohlprofils (1) verlaufen.

6. Hohlprofil (1) nach einem der vorangehenden Ansprüche,
**dadurch gekennzeichnet, dass** das Versteifungselement (2) aus wenigstens einem stegartigen Element gebildet ist, an dessen Enden jeweils ein Eingriffsmittel (5) vorgesehen ist.

7. Hohlprofil (1) nach Anspruch 6,
**dadurch gekennzeichnet, dass** das Versteifungselement (2) quer zur axialen Richtung des Hohlprofils (1) kreuzförmig ausgebildet ist, an dessen Enden jeweils ein Eingriffsmittel (5) vorgesehen ist.

8. Hohlprofil (1) nach einem der vorangehenden Ansprüche,
**dadurch gekennzeichnet, dass** das Versteifungselement (2) plattenförmig oder als kurzes Profilstück quer zur axialen Richtung des Hohlprofils (1) ausgebildet ist.

9. Hohlprofil (1) nach einem der vorangehenden Ansprüche,
**dadurch gekennzeichnet, dass** zur Positionierung des Versteifungselementes (2) an vorbestimmten Positionen des Hohlprofils (1) Tiefenanschläge vorgesehen sind.

10. Hohlprofil (1) nach einem der vorangehenden Ansprüche,
**dadurch gekennzeichnet, dass** das Hohlprofil (1) ein Blechprofil und/oder ein Strangpreßprofil, vorzugsweise aus Leichtmetall, wie Aluminium oder Magnesium ist.

11. Hohlprofil (1) nach einem der vorangehenden Ansprüche,
**dadurch gekennzeichnet, dass** das Versteifungselement (2) ein Strangpreßprofil und/oder ein Gußteil, vorzugsweise aus Aluminium oder Magnesium ist.

12. Hohlprofil (1) nach einem der vorangehenden Ansprüche,
**dadurch gekennzeichnet, dass** das Hohlprofil (1) und das Versteifungselement (2) aus unterschiedlichen Materialgruppen hergestellt sind, vorzugsweise das Hohlprofil (1) aus Aluminium und das Versteifungselement (2) aus Kunststoff, vorzugsweise aus einem faserverstärkten Kunststoff.

13. Verfahren zum Versteifen eines nach einem der vorangehenden Ansprüche ausgebildeten Hohlprofils (1) für Kraftfahrzeuge mittels einem nach einem der vorangehenden Ansprüche ausgebildeten Versteifungselementes (2), **dadurch gekennzeichnet, dass** nach dem Einführen des Versteifungselementes (2) in das Hohlprofil (1) das Versteifungselement (2) mittels eines Tiefenanschlages an einer vorbestimmten Stelle des Hohlprofils (1) positioniert und anschließend mit dem Hohlprofil (1) kraftschlüssig verbunden wird.

14. Verfahren nach Anspruch 13,
**dadurch gekennzeichnet, dass** das Versteifungselement (2) durch Reibschweißen oder thermisches Schweißen mit dem Hohlprofil (1) kraftschlüssig verbunden wird.

15. Verfahren nach Anspruch 13,
**dadurch gekennzeichnet, dass** das Versteifungselement (2) durch Nieten und/oder Kleben mit dem Hohlprofil (1) kraftschlüssig verbunden wird.

16. Verfahren nach Anspruch 13,
**dadurch gekennzeichnet, dass** das Versteifungselement (2) durch Verprägen oder durch Verprägen und Kleben mit dem Hohlprofil (1) kraftschlüssig verbunden wird.

17. Verfahren nach Anspruch 13,
**dadurch gekennzeichnet, dass** das Versteifungselement (2) mittels Schrauben oder durch Schrauben und Kleben mit dem Hohlprofil (1) kraftschlüssig verbunden wird.

18. Verfahren nach einem der Ansprüche 13 bis 17,
**dadurch gekennzeichnet, dass** zusätzlich zu einem Versteifungselement (2) ein Schaumformling aus Akkustikschaum in das Hohlprofil (1) eingeführt wird und mit dem Hohlprofil (1) kraftschlüssig verbunden wird.

19. Verfahren nach Anspruch 18,
**dadurch gekennzeichnet, dass** eine kraftschlüssige Verbindung des Schaumformlings mit dem Hohlprofil (1) zusammen mit der kraftschlüssigen Verbindung des Versteifungselementes (2) mit dem Hohlprofil (1) durchgeführt wird.
